(19) Europäisches Patentamt
European Patent Office
Office européen des brevets

(11) **EP 1 746 853 A1**

(12) **EUROPEAN PATENT APPLICATION**

(43) Date of publication:
**24.01.2007 Bulletin 2007/04**

(51) Int Cl.:
***H04Q 7/38*** (2006.01)

(21) Application number: **05256702.1**

(22) Date of filing: **28.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.07.2005 JP 2005213142**

(71) Applicant: **FUJITSU LIMITED**
**Kawasaki-shi,**
**Kanagawa 211-8588 (JP)**

(72) Inventor: **Saito, Naoyuki,**
**Fujitsu Limited**
**Kawasaki-shi**
**Kanagawa 211-8588 (JP)**

(74) Representative: **Hitching, Peter Matthew et al**
**HASELTINE LAKE**
**Imperial House**
**15-19 Kingsway**
**London WC2B 6UD (GB)**

(54) **Packet scheduling method and device in wireless communications network**

(57) A packet scheduling method includes a step of receiving each of wireless signals transmitted from a plurality of terminals, a determination step (S502-S506) of determining a combination of the terminals having an interference-suppressed relationship and the terminals having a mutually-interfered relationship among the plurality of terminals based on the respective signals received, and a step of controlling a packet data transmission timing to each terminal by permitting the terminals having the interference-suppressed relationship to transmit predetermined packet data (S507) and permitting the terminals having the mutually-interfered relationship to transmit the packet data by time sharing (S508) according to the determined combination.

Such a packet scheduling method can improve a throughput of packet data transmitted and received in a way that suppresses deterioration in communication quality due to interference between packet data signals.

*FIG. 5*

EP 1 746 853 A1

**Description**

The present invention relates to a scheduling method actualizing a fast uplink by a mobile wireless communication technology and a device implementing this method.

Currently, a variety of technologies enabling a fast large-capacity data transfer are developed as wireless communication technologies.

One of such technologies is an adaptive array antenna technology. The adaptive array antenna technology involves using an array antenna constructed of a plurality of antenna elements, wherein a signal transmitted and received through each antenna element is multiplied by a weight coefficient (weight) corresponding to a propagation environment, and signal directivity is thereby controlled. Owing to this contrivance, the adaptive array antenna technology is capable of suppressing interference waves and, more essentially, improving a communication quality.

Then, in this type of adaptive array antenna technology, a beam forming technology is given as a method employed for controlling the signal directivity. The beam forming technology is that a relative phase of the signal transmitted and received is adjusted by multiplying the signal transmitted and received from each antenna by the weight, thereby changing a direction that is strong of a transmission/reception intensity of radio waves.

In a receiving device utilizing the array antenna described above, a method disclosed in Japanese Patent Laid-Open Publication No. 2002-84216 that follows is given as a method of forming the beam at a high speed.

Further, currently, HSDPA (High Speed Downlink Packet Access) is developed as a large-capacity fast packet data transfer technology of a downlink signal from a base station to a mobile station (a mobile terminal). On the other hand, there is HSUPA (High Speed Uplink Packet Access) as a large-capacity fast packet data transfer technology of an uplink signal from the mobile station to the base station. The HSUPA method is now at a stage of being deliberated and examined by 3GPP (3rd Generation Partnership Project), and detailed specifications are not yet clarified (defined). It should be noted that a method supporting abrupt uplink/downlink data packet communications in a spectrum diffusion communication system, is disclosed in Japanese Unexamined Patent Publication No. 2001-523901.

A plurality of users can perform the large-capacity fast packet data communications by utilizing the conventional arts given above. The conventional arts, however, have such problems that interference occurs among the packet data signals from and to the users by performing the large-capacity fast packet communications, the communication quality deteriorates due to the interference, and eventually there decreases a throughput of the packet data transferred and received in the communications.

To cope with these problems, also in the HSUPA method, it is considered that a device of the base station requires a retransmission control function and a schedule management function of access requests from the users. Then, it is considered that the scheduling method in the device of the base station has great influence on the throughput of the data.

It is desirable to provide a packet scheduling method in the wireless communications and a device implementing this method that improve the throughput of the packet data transmitted and received in a way that suppresses the deterioration in the communication quality due to the interference among the packet data signals.

According to an embodiment of one aspect of the present invention there is provided a packet scheduling method by a mobile wireless communication device, comprising a step of receiving each of wireless signals transmitted from a plurality of terminals, a determination step of determining a combination of the terminals having an interference-suppressed relationship and the terminals having a mutually-interfered relationship among the plurality of terminals based on each of the received signals, and a step of controlling a packet data transmission timing to each terminal by permitting the terminals having the interference-suppressed relationship to transmit predetermined packet data and permitting the terminals having the mutually-interfered relationship to transmit the packet data by time sharing according to the determined combination.

In such a method, when receiving the wireless signals transmitted from the plurality of terminals, with respect to each of the terminals, the terminals having the interference-suppressed relationship and the terminals having the mutually-interfered relationship among other terminals, are determined based on the received signals.

Each of the terminals judged from the result of the determination to have the interference-suppressed relationship, i.e., judged to be hard to receive the interference is permitted to transmit the predetermined packet data transmission. While on the other hand, each of the terminals having the mutually-interference relationship is permitted to transmit the packet data by time sharing so as not to transmit the packet data simultaneously from these terminals.

Hence, in an embodiment of the present invention, the respective terminals having the mutually-interfered relationship do not transmit the packet data signals simultaneously, and it is therefore possible to restrain the deterioration in communication quality due to the interference among the fast packet data. Then, a retransmission occurrence count of the same data that is caused by an occurrence of error can be reduced by suppressing the deterioration in communication quality due to the interference, and more essentially the throughput of the packet data can be improved.

Further, in one embodiment the method further comprises a detection step of detecting each of arrival angles of each of the received signals, wherein the determination step involves determining a combination of the terminals having the interference-suppressed relationship and the terminals having the mutually-interfered relationship among the plurality of terminals based on differences in the arrival angles among the terminals.

In this case, with respect to each of the terminals, the difference in arrival angle between the signals from the other terminals is each obtained. Then, whether each terminal has the interference-suppressed relationship or the mutually-interfered relationship is determined based on this angular difference.

Therefore, according to one embodiment, the interference relationship of each terminal is determined by employing the arrival angle as a result of estimating the arrival direction, and hence the interference relationship between the respective terminals can be accurately judged.

Still further, the method may further comprise a calculation step of calculating a weight coefficient for controlling directivity with respect to each of the received signals, wherein the determination step involves obtaining a difference in arrival angle between the terminals based on the weight coefficient, and determines, based on this angular difference, a combination of the terminals having the interference-suppressed relationship and the terminals having the mutually-interfered relationship among the plurality of terminals.

In this case, the weight coefficient (weight) calculated for forming the beam is used for each of the received signals, and the difference in arrival angle between the individual terminals is thus obtained.

Hence, according to one embodiment of the present invention, the interference relationship between the respective terminals can be judged based on the result of calculation for the signal adaptive control, whereby a calculation processing quantity is reduced and the fast judgment can be attained.

Yet further, the determination step may involve comparing the difference in the arrival angle between the terminals with a predetermined angle area, and thus judging whether in the interference-suppressed relationship or in the mutually-interfered relationship.

Therefore, in this case, the setting of the predetermined angle area can be previously changed corresponding to a communication environment, so that flexible control can be executed.

It should be noted that in another aspect of the present invention there is provided a program for executing any one of the methods described above. The program may be stored on a readable-by-computer storage medium, or may be carried by a transmission medium such as a signal. In addition, another aspect of the present invention can provide a mobile wireless communication device actualizing any one of the methods.

In embodiments of the present invention, the throughput of the packet data to be transmitted and received can be improved by suppressing the deterioration in communication quality due to the interference among the packet data signals.

Reference will now be made, by way of example, to the accompanying drawings, in which:

FIG. 1 is a diagram showing a functional configuration of a mobile wireless communication device in an embodiment of the present invention;
FIG. 2 is a diagram showing an example of a signal-to-signal angular difference calculation method;
FIG. 3 is a diagram showing an example of a scheduling result in the Figure 1 embodiment;
FIG. 4 is a diagram showing a transmission sequence in each mobile station after assignment; and
FIG. 5 is a diagram showing an operation flow of the mobile wireless communication device in the Figure 1 embodiment.

A mobile wireless communication device in an embodiment of the present invention will hereinafter be described with reference to the drawings. It should be noted that a configuration of the embodiment, which will be discussed below, is an exemplification, and the present invention is not limited to the configuration of the following embodiment.

[System Architecture]

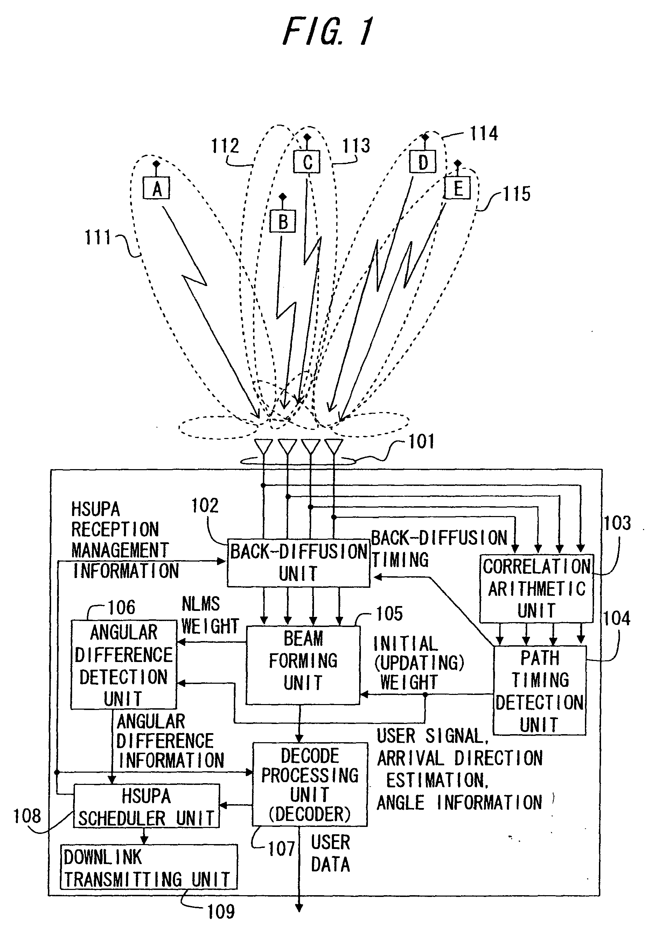

A functional configuration of the mobile wireless communication device (which will hereafter be simply referred to also as this device) in the embodiment, will be explained with reference to FIG. 1. FIG. 1 is a block diagram showing the functional configuration of the mobile wireless communication device in the embodiment. In this device, the respective function units that will be explained below may be constructed of hardware circuits to actualize a series of processes, and includes a CPU (Central Processing Unit), a memory, an input/output interface, etc., and this CPU executes a control program etc. stored on the memory, thereby controlling the respective function units that will hereinafter be described. Moreover, this device is assumed to be a device operating on a base station receiving and transmitting a beam from/to a mobile station, and is largely constructed of functions units in a receiving system (uplink) and function units in a transmitting system (downlink). Note that the present invention is focused on a technology related to an uplink direction from the mobile station to the base station, and hence explanations of the function units concerning a downlink direction are omitted.

This device is constructed of an array antenna 101, a back-diffusion unit 102, a correlation arithmetic unit 103, a path timing detection unit 104, a beam forming unit 105, an angular difference detection unit 106, a decode processing unit (decoder) 107, a HSUPA (High Speed Uplink Packet Access) scheduler unit 108, a downlink transmitting unit 109, and so on. Among these function units, the units essential to the present invention are the function units related to the angular difference detection unit 106 and the HSUPA scheduler unit 108, and hence other function units are not limited to the configurations explained herein. Those other function units may take configurations enabling actualization of the wireless communications using an adaptive array antenna technology. The respective function units provided in the system will hereinafter be explained.

⟨Array Antenna⟩

FIG. 1 illustrates an example of a configuration in the case of providing the array antenna 101 constructed of four pieces of antenna elements. The array antenna 101 receives packet signals etc. transmitted from the mobile station. Further, the array antenna 101 receives a HSUPA access request for starting HSUPA communications from the mobile station. The signals received by the respective antenna elements are each inputted to this device. Further, FIG. 1 shows a mode of receiving the signals transmitted from mobile stations A, B, C, D and E. Note that this device does not limit the number of antenna elements.

⟨Back-Diffusion Unit⟩

The back-diffusion unit 102 inversely diffuses (back-diffuses) the signals received from the respective antenna elements by use of diffusion codes assigned individually at a back-diffusion timing received from the path timing detection unit 104. The back-diffused signals are transferred to the beam forming unit 105.

⟨Correlation Arithmetic Unit⟩

The correlation arithmetic unit 103 executes a correlation process with respect to the signals from the individual antenna elements. The signals subjected to the correlation process are transferred to the path timing detection unit 104.

⟨Path Timing Detection Unit⟩

The path timing detection unit 104 detects a multi-path timing on the basis of the signals, subjected to the correlation process, from the respective antenna elements. The path timing detection unit 104 obtains a back-diffusion timing, an arrival direction, etc. with respect to each detected path. The path timing detection unit 104, among pieces of information obtained, transfers the back-diffusion timing to the back-diffusion unit 102, and transfers direction-of-arrival estimated angle information (which will hereinafter be referred to the DOA information) to the beam forming unit 105 and the angular difference detection unit 106.

⟨Beam forming Unit⟩

The beam forming unit 105 obtains a weight coefficient (which is also simply termed a weight) for each signal received from the back-diffusion unit 102 by use of an NLMS (Normalized Least Mean Square) algorithm. At this time, the beam forming unit 105 may use the DOA information etc. received from the path timing detection unit 104 as an initial weight. Further, the beam forming unit 105 executes phase control etc. about the back-diffused signal by employing the weight acquired earlier. The thus adaptively controlled and generated signals are synthesized and transferred to the decode processing unit 107.

Thus, concepts of the beam-formed signals by the beam forming unit 105 are illustrated by 111, 112, 113, 114, 115 in FIG. 1. The signals from the mobile stations A, B, C, D and E are each beam-formed as illustrated by 111, 112, 113, 114, 115. It should be noted that the beam forming algorithm employed by the beam forming unit 105 is not limited to the NLMS algorithm.

⟨Decode Processing Unit (Decoder)⟩

The decode processing unit 107, upon receiving the signals adaptively controlled and synthesized by the beam forming unit 105, decodes these signals into reception data.

(Angular Difference Detection Unit)

The angular difference detection unit 106 calculates an angular difference between the signals with respect to arrival signals from the respective mobile stations. The angular difference detection unit 106 may, when calculating this angular difference, calculate it by use of a weight (such as an NLMS weight) received from the beam forming unit 105, and may also calculate the angular difference by employing an arrival angle of every signal received from the path timing detection unit 104. A method of using the arrival angle enables the calculation in a way that obtains a difference between the respective arrival angles.

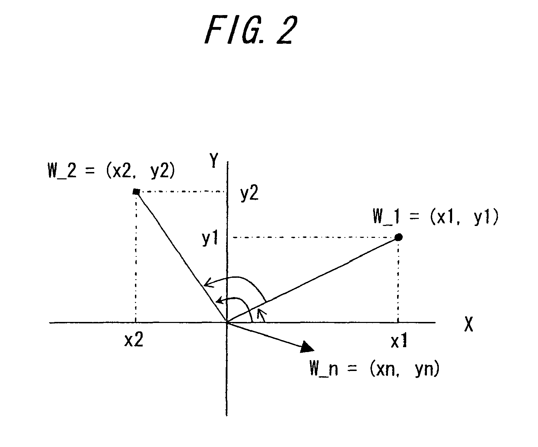

On the other hand, a method using the weight is that the weight is complex information, and therefore a result obtained by effecting complex multiplication of each weight is converted into an angle through an arc tangent operation, thereby acquiring an angular difference of each weight. Herein, an example of a method of obtaining the angular difference between the signals from the NLMS weight will be described with reference to FIG. 2. FIG. 2 is a diagram showing an example of the method of calculating the angular difference between the signals. The NLMS weight is normally dealt with as a complex number component consisting of X-vector and Y-vector on an X-Y phase plane. It follows that this component contains amplitude information and phase (angle) information, respectively. In the example shown in FIG. 2, it follows that the angular difference detection unit 106 receives, from the beam forming unit 105, weight information (W_1) about the signal from the mobile station A and weight information (W_2) about the signal from the mobile station B.

[Mathematical Expression 1]

$$\text{W\_1 Phase:} \quad \phi 1 = \tan^{-1}\left(\frac{y1}{x1}\right) \; ; -\pi \sim \pi \, [radian]$$

$$\text{W\_2 Phase:} \quad \phi 2 = \tan^{-1}\left(\frac{y2}{x2}\right) \; ; -\pi \sim \pi \, [radian]$$

The angular difference detection unit 106 obtains, from the weight information, phase difference weight information between W_1 and W_2 such as W_2 × W_1*. The symbols "*" represents a complex conjugate. Herein, if W_2 × W_1* = W_e_21 = (xe_21, ye_21), the angular difference between W_1 × W_2 can be given by the following formula.

[Mathematical Expression 2]

W_1 to W_2 Angular Difference =

$$\frac{180}{\pi} \times \tan^{-1}\left(\frac{ye\_21}{xe\_21}\right) \; ; -180° \sim 180°$$

The thus-calculated angular difference information is transferred to the HSUPA scheduler unit 108.

(HSUPA Scheduler Unit)

The HSUPA scheduler unit 108 compares the angular difference information transferred from the angular difference detection unit 106 with a predetermined angle area, thus determining a combination of the mobile stations each having an easy-to-receive-interference relationship (which will hereinafter be referred to as interference users) with respect to the individual mobile stations. Similarly, the HSUPA scheduler unit 108 determines a combination of interference-suppressed mobile stations (existing in the vicinity of a NULL direction) (which will hereinafter be termed non-interference users) with respect to the individual mobile stations. Namely, the HSUPA scheduler unit 108 judges whether each angular difference is within or beyond the predetermined angle area and, if within the predetermined angle area, determines the target mobile station to be the interference user. Note that the predetermined angle area may take a value stored on the memory etc. in this device.

A state in the example shown in FIG. 1 is that the signals from the mobile station B and the mobile station C are easy to receive the interference with each other (a relationship between 112 and 113), and similarly the signals from the mobile station D and the mobile station E are also easy to receive the interference with each other (a relationship between 114 and 115). Conversely, the signal from the mobile station A and the signals from the mobile stations D, E are hard to receive the interference with each other (a relationship between 111, 114 and 115). Hence, the angular difference detection unit 106, for instance, with respect to the mobile station B, determines the mobile station C to be the interference user, and determines the mobile stations A, D and E to be non-interference users.

The HSUPA scheduler unit 108, when determining the combination of the interference user(s) and the non-interference user(s), executes, based on this result, scheduling of the uplink signals from the respective mobile stations. Further, the HSUPA scheduler unit 108, in this scheduling, may assign HSUPA diffusion codes (channel codes) corresponding to each access-slot-enabled transmission data. In this case, the HSUPA scheduler unit 108 may assign the channel code by referring to a transmission packet capacity of which the mobile station notifies through a HSUPA control channel etc..

The scheduling by the HSUPA scheduler unit 108 is that the mobile stations are allocated to the access slots by time sharing so as not to simultaneously transmit the transmission packets from the interference users. The HSUPA scheduler unit 108 notifies the downlink transmitting unit 109 of a result of the assignment, the assigned channel codes and permission of the HSUPA data transmission. In addition, the HSUPA scheduler unit 108 may also notify the downlink transmitting unit 109 of retransmission request information, an applied modulation method and so on.

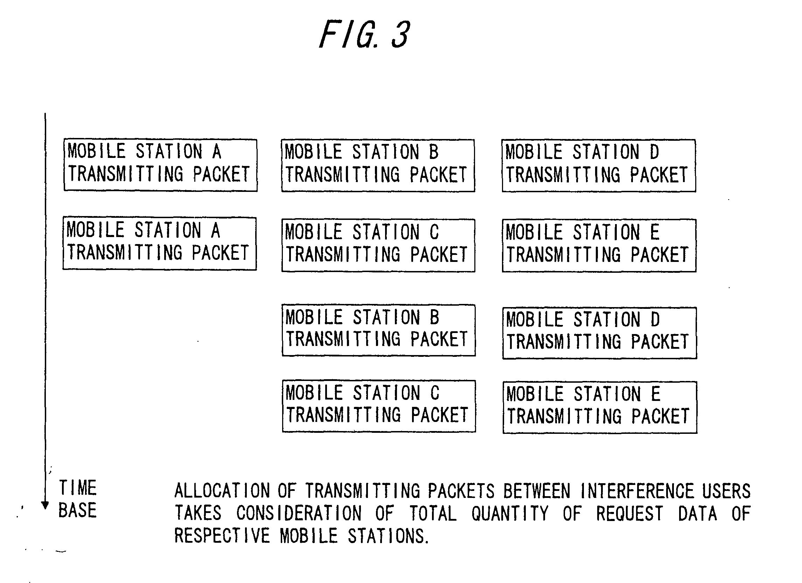

FIG. 3 illustrates how transmission timings of the transmission packets of the mobile stations A, B, C, D and E shown in FIG. 1 are controlled in the aforementioned scheduling. In FIG 3, the axis of ordinates represents a time base, and the transmission packets from the respective mobile stations are depicted by quadrangle blocks. Note that the example in FIG. 3 is an instance of a case where each mobile station requests the transmission of the transmission packets indicated by the two blocks.

In the example shown in FIG. 1, as explained earlier, the HSUPA scheduler unit 108 judges the mobile stations B, C and the mobile stations D, E to be respectively the interference users, the mobile stations B, C, D, E to be the non-interference users to the mobile station A, the mobile stations A, D, E to be the non-interference users to the mobile stations B, C, and the mobile stations A, B, C to be the non-interference users to the mobile stations D, E. In this case, the HSUPA scheduler unit 108 allocates the access slots to the mobile stations A, B and D, and allocates the mobile stations A, C and E to the access slots thereafter. Namely, the scheduling is conducted by time sharing so that the mobile stations B, C and the mobile stations D, E as the interference users do not transmit simultaneously. Further, the HSUPA scheduler unit 108 may assign the channel codes of the respective transmission packets on the basis of the transmission packet capacity of each mobile station.

Moreover, in the back-diffusion unit 102, the mobile station allocated by the allocation process of the HSUPA scheduler unit 108 is determined, and therefore the mobile station in which the HSUPA packet data signals should be back-diffused, demodulated and decode-processed per access slot, can be limited. Through this operation, the signal from the not-transmit mobile station can be meanwhile omitted in its HSUPA signal processing, and hence reception management information of each of the mobile stations is fed back to the back-diffusion unit 102, the decode processing unit 107, etc..

⟨Downlink Transmitting Unit⟩

The downlink transmitting unit 109 transmits the allocation result, the channel code, the retransmission request information, the applied modulation method, etc. received from the HSUPA scheduler unit 108 to the respective mobile stations through, e.g., the HSUPA control channel. Note that the notification of these pieces of information to the mobile stations from the downlink transmitting unit 109 is not limited to this method, and may be given by other methods similar to the method defined by HSDPA (High Speed Downlink Packet Access) .

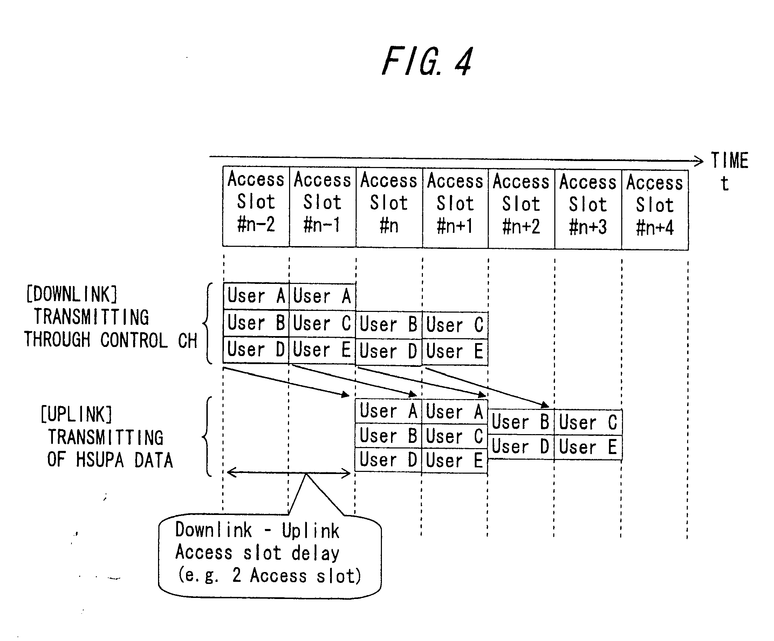

FIG. 4 shows a transmission sequence of the respective mobile stations receiving the information through the HSUPA control channel. Each of the mobile stations decrypts the self-station allocation result from the control channel, and determines HSUPA transmission permitted time (access permitted slot). Then, each mobile station transmits by use of only the access permitted slot given from the base station but does not transmit by the access slots allocated to the other mobile stations. The example shown in FIG. 4 is that, for instance, the mobile station A (User A), the mobile station B (User B) and the mobile station D (User D) are access-permitted through an access slot (#n-2). From these pieces of information, the mobile station A determines access sots (#n) and (#n+1) as the access permitted slots (this is an example of a case where an access slot delay is set to 2 access slots). Namely, if a simultaneous access slot is shared among the plurality of mobile stations, it follows that the mobile stations capable of the simultaneous transmission are limited by the sequence described above.

⟨Operational Example⟩

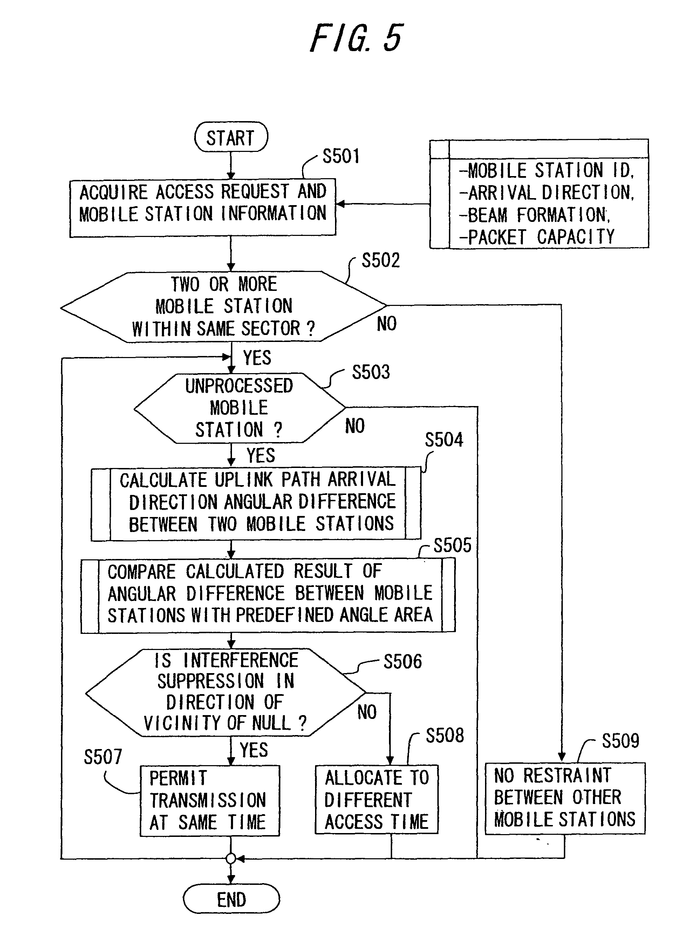

An operational example of the mobile wireless communication device in the embodiment will be explained with reference to FIG. 5. FIG. 5 is a flowchart showing the operational example of this device.

This device receives the HSUPA access request from the mobile station through, e.g., the HSUPA control channel (S501). This HSUPA access request signal contains a mobile station ID specifying the source mobile station, a packet capacity of the packets transmitted, and so on.

This device, by use of the path timing detection unit 104 etc., executes the arrival direction estimation, etc. from the received access request signal and thus detects a sector where the mobile station as the access request sender exists. Then, the angular difference detection unit 106 of this device checks whether or not there are other mobile stations performing the HSUPA communications within the detected sector (S502). The angular difference detection unit 106 executes this check by referring to, e.g., a database etc. for managing the information about the mobile stations performing the HSUPA communications.

The angular difference detection unit 106, when judging that none of two or more mobile stations exist within the same sector (S502; NO), notifies the HSUPA scheduler unit 108 of this purport. The HSUPA scheduler unit 108 judges from this notification that there is no restraint between the other mobile stations (S509). The downlink transmitting unit 109 is notified of the judgment that there is no restraint between the other mobile stations, and eventually the mobile station is notified of this judgment. This enables the mobile station to transmit without undergoing the access slot restriction.

On the other hand, the angular difference detection unit 106, when judging that there exist two or more mobile stations including the mobile station sending the access request this time within the sector (S502; YES), further checks whether or not there is a not-yet-processed mobile station in the mobile stations performing the HSUPA communications within the sector (S503). The not-yet-processed mobile station represents a mobile station that is not yet subjected to a series of rescheduling processes. The angular difference detection unit 106 executes the processing till the not-yet-processed mobile station disappears through this check (S503; YES).

Namely, in this device, when the HSUPA access request is given from an arbitrary mobile station, the scheduling processes are again executed upon the other mobile stations performing the HSUPA communications within the sector where this requester mobile station exists. This operation can give flexibility to such a case that there is a mobile station newly notifying of the access request in the sector where there exist the mobile stations already executing the HSUPA access. The angular difference detection unit 106 calculates respectively, with respect to the not-yet-processed mobile station, the arrival angular difference of the uplink signal from the other mobile stations existing within the same sector and performing the HSUPA communications (S504). The angular difference detection unit 106 transfers the calculated arrival angular difference to the HSUPA scheduler unit 108. Note that the angular difference detection unit 106 may also obtain the arrival angular difference from the other mobile stations by effecting the complex multiplication, etc. of the weight information received from the beam forming unit 105.

The HSUPA scheduler unit 108 compares the transferred angular difference with the predetermined angle area (S506). The predetermined angle area may take a value stored beforehand on the memory etc.. The HSUPA scheduler unit 108, when judging from the comparison that the target mobile station is the non-interference user, i.e., exists in an interference-suppressed direction (the vicinity of a NULL direction) (S506; YES), judges that the transmission at the same point of time can be permitted (S507). While on the other hand, the HSUPA scheduler unit 108 judges from the comparison that the target mobile station is the interference user, i.e., does not exist in the interference-suppressed direction (the vicinity of a NULL direction) (S506; NO), judges that there be a necessity of allocating (the mobile station) to a different access slot (S508).

The HSUPA scheduler unit 108 allocates, based on the judgment (S507, S508), the access-permitted slot to the mobile station subjected to the processing. At this time, the HSUPA scheduler unit 108 may simultaneously assign the channel code by referring to the transmission packet capacity of which the notification is given through the control channel etc.. The HSUPA scheduler unit 108 transfers a result of this allocation, the channel code, etc. to the downlink transmitting unit 109.

The downlink transmitting unit 109 notifies the mobile station of the information received from the HSUPA scheduler unit 108 through the HSUPA control channel etc..

⟨Operation and Effect of Embodiment⟩

In the mobile wireless communication device in the embodiment, when receiving the HSUPA access request signal from the mobile station, the sector of the source mobile station is detected from the access request signal, and the existences of the other mobile stations requesting the HSUPA communications within the same sector are checked.

When judging that the plurality of other mobile stations exist in the same sector, with respect to each station, the arrival angular differences of the signals from the other mobile stations are each calculated. Subsequently, the calculated angular difference is compared with the predetermined angle area, and, with respect to each mobile station, the mobile stations in the other mobile stations, which have an interference-suppressed relationship and a mutually-interfered relationship are determined.

Moreover, the arrival angular difference of the signals from the other mobile stations may be calculated by employing the weight information acquired by a directivity control algorithm in the beam forming unit 105. In this case, a predetermined arithmetic operation is effected on the weight information, thereby obtaining the angular difference of the signals between the other mobile stations.

As to the mobile stations having the mutually-interfered relationship as a result of the determination, the access slots are allocated by time sharing so as not to transmit the packets simultaneously from these mobile stations. Further, similarly, the channel code is assigned based on the transmission packet capacity of which the mobile station notifies. The mobile station is notified of the assigned information.

Thus, in the embodiment, the mobile stations existing in such locations that the packet data signals are easy to be interfered, are judged from the angular difference of the arrival signals between the mobile stations existing in the same sector, and the scheduling is conducted so that the packets from these mobile stations are transmitted by time sharing.

With this contrivance, it is feasible to restrain a communication quality from being deteriorated due to the interference among pieces of fast packet data. Further, a retransmission occurrence count of the same data due to an occurrence of error can be reduced by restraining the communication quality from being deteriorated by the interference, and, more essentially, a throughput of the packet data can be improved.

⟨Modified Example⟩

In the embodiment of the present invention, the HSUPA access request sent from the mobile station is used as a trigger of the scheduling control, however, the scheduling may further be controlled for every access slot. Further, the scheduling may also be controlled at an interval of a predetermined number of slots (e.g., a 2-access-slot interval). Furthermore, an end of the HSUPA communications on an arbitrary mobile station may also be used as a trigger. This contrivance makes it possible to eliminate an unnecessary calculating process, whereby the scheduling process of this device can be speeded up.

**Claims**

1. A mobile wireless communication device comprising:

   a receiving unit receiving each of wireless signals transmitted from a plurality of terminals;
   a determination unit determining a combination of the terminals having an interference-suppressed relationship and the terminals having a mutually-interfered relationship among the plurality of terminals based on each of the received wireless signals; and
   a control unit controlling a packet data transmission timing to each of the plurality of terminals by permitting the terminals having the interference-suppressed relationship to transmit predetermined packet data and permitting the terminals having the mutually-interfered relationship to transmit the packet data by time sharing according to the determined combination.

2. A mobile wireless communication device according to Claim 1, further comprising a notifying unit determining a diffusion code corresponding to the result of control of the packet data transmission timing, and notifying each of the plurality of terminals of the control result and the diffusion code.

3. A mobile wireless communication device according to Claim 1 or 2, further comprising a detection unit detecting each of arrival angles of each of the received wireless signals,
   wherein the determination unit determines the combination of the terminals having the interference-suppressed relationship and the terminals having the mutually-interfered relationship among the plurality of terminals based on differences in the arrival angles between the plurality of terminals.

4. A mobile wireless communication device according to Claim 1 or 2, further comprising a calculation unit calculating a weight coefficient for controlling directivity with respect to each of the received wireless signals,
   wherein the determination unit obtains a difference in arrival angle between the plurality of terminals based on the weight coefficient, and determines, based on the difference in arrival angle, the combination of the terminals having the interference-suppressed relationship and the terminals having the mutually-interfered relationship among the plurality of terminals.

5. A mobile wireless communication device according to Claim 3 or 4, wherein the determination unit judges whether in the interference-suppressed relationship or in the mutually-interfered relationship by comparing the difference in the arrival angle between the plurality of terminals with a predetermined angle area.

6. A mobile wireless communication device according to Claim 3, wherein the detection unit detects the arrival angle if the received wireless signals are fast packet data transmission request signals.

7. A mobile wireless communication device according to Claim 4, wherein the calculation unit calculates the weight coefficient if the received wireless signals are the fast packet data transmission request signals.

8. A mobile wireless communication device according to Claim 3, further comprising a recognition unit recognizing a sector where each of the plurality of terminals exists based on each of the received wireless signals, wherein the detection unit detects the arrival angle if a plurality of terminals requesting the fast packet data transmission exist within the same sector.

9. A mobile wireless communication device according to Claim 4, further comprising a recognition unit recognizing a sector where each of the plurality of terminals exists based on each of the received wireless signals, wherein the calculation unit calculates the weight coefficient if a plurality of terminals requesting the fast packet data transmission exist within the same sector.

10. A packet scheduling method by a mobile wireless communication device, comprising:

a step of receiving each of wireless signals transmitted from a plurality of terminals;
a determination step of determining a combination of the terminals having an interference-suppressed relationship and the terminals having a mutually-interfered relationship among the plurality of terminals based on each of the received wireless signals; and
a step of controlling a packet data transmission timing to each of the plurality of terminals by permitting the terminals having the interference-suppressed relationship to transmit predetermined packet data and permitting the terminals having the mutually-interfered relationship to transmit the packet data by time sharing according to the determined combination.

11. A packet scheduling method according to Claim 10, further comprising a step of determining a diffusion code corresponding to the result of control of the packet data transmission timing, and notifying each of the plurality of terminals of the control result and the diffusion code.

12. A packet scheduling method according to Claim 10 or 11, further comprising a detection step of detecting each of arrival angles of each of the received wireless signals, wherein the determination step determines the combination of the terminals having the interference-suppressed relationship and the terminals having the mutually-interfered relationship among the plurality of terminals based on differences in the arrival angles between the plurality of terminals.

13. A packet scheduling method according to Claim 10 or 11, further comprising a calculation step of calculating a weight coefficient for controlling directivity with respect to each of the received wireless signals, wherein the determination step obtains a difference in arrival angle between the plurality of terminals based on the weight coefficient, and determines, based on the difference in arrival angle, the combination of the terminals having the interference-suppressed relationship and the terminals having the mutually-interfered relationship among the plurality of terminals.

14. A packet scheduling method according to Claim 12 or 13, wherein the determination step judges whether in the interference-suppressed relationship or in the mutually-interfered relationship by comparing the difference in the arrival angle between the plurality of terminals with a predetermined angle area.

15. A packet scheduling method according to Claim 12, wherein the detection step detects the arrival angle if the received wireless signals are fast packet data transmission request signals.

16. A packet scheduling method according to Claim 13, wherein the calculation step calculates the weight coefficient if the received wireless signals are the fast packet data transmission request signals.

**17.** A packet scheduling method according to Claim 12, further comprising a step of recognizing a sector where each of the plurality of terminals exists based on each of the received wireless signals,
wherein the detection step detects the arrival angle if a plurality of terminals requesting the fast packet data transmission exist within the same sector.

**18.** A packet scheduling method according to Claim 13, further comprising a step of recognizing a sector where each of the plurality of terminals exists based on each of the received wireless signals,
wherein the calculation step calculates the weight coefficient if a plurality of terminals requesting the fast packet data transmission exist within the same sector.

**19.** A program adapted to be executed by a processor of a base station of a wireless communication system, said program causing the base station to carry out the steps of the packet scheduling method of any one of claims 10 to 18.

EP 1 746 853 A1

# FIG. 1

11

# FIG. 2

W_2 = (x2, y2)

Y

y2

W_1 = (x1, y1)

y1

x2

x1

X

W_n = (xn, yn)

## FIG. 3

| MOBILE STATION A TRANSMITTING PACKET | MOBILE STATION B TRANSMITTING PACKET | MOBILE STATION D TRANSMITTING PACKET |
|---|---|---|
| MOBILE STATION A TRANSMITTING PACKET | MOBILE STATION C TRANSMITTING PACKET | MOBILE STATION E TRANSMITTING PACKET |
| | MOBILE STATION B TRANSMITTING PACKET | MOBILE STATION D TRANSMITTING PACKET |
| | MOBILE STATION C TRANSMITTING PACKET | MOBILE STATION E TRANSMITTING PACKET |

TIME
BASE

ALLOCATION OF TRANSMITTING PACKETS BETWEEN INTERFERENCE USERS TAKES CONSIDERATION OF TOTAL QUANTITY OF REQUEST DATA OF RESPECTIVE MOBILE STATIONS.

EP 1 746 853 A1

# FIG. 4

TIME
t

| Access Slot #n-2 | Access Slot #n-1 | Access Slot #n | Access Slot #n+1 | Access Slot #n+2 | Access Slot #n+3 | Access Slot #n+4 |
|---|---|---|---|---|---|---|

[DOWNLINK]
TRANSMITTING
THROUGH CONTROL CH

| User A | User A | | |
| User B | User C | User B | User C |
| User D | User E | User D | User E |

[UPLINK]
TRANSMITTING
OF HSUPA DATA

| User A | User A | User B | User C |
| User B | User C | User D | User E |
| User D | User E | | |

Downlink - Uplink
Access slot delay
(e.g. 2 Access slot)

EP 1 746 853 A1

## FIG. 5

START

ACQUIRE ACCESS REQUEST AND
MOBILE STATION INFORMATION ← S501

-MOBILE STATION ID,
-ARRIVAL DIRECTION,
-BEAM FORMATION,
-PACKET CAPACITY

TWO OR MORE
MOBILE STATION
WITHIN SAME SECTOR ? — S502 — NO

YES

UNPROCESSED
MOBILE
STATION ? — S503 — NO

YES

CALCULATE UPLINK PATH ARRIVAL
DIRECTION ANGULAR DIFFERENCE
BETWEEN TWO MOBILE STATIONS — S504

COMPARE CALCULATED RESULT OF
ANGULAR DIFFERENCE BETWEEN MOBILE
STATIONS WITH PREDEFINED ANGLE AREA — S505

IS INTERFERENCE
SUPPRESSION IN
DIRECTION OF
VICINITY OF NULL ? — S506 — NO

YES

S507
PERMIT
TRANSMISSION
AT SAME TIME

S508
ALLOCATE TO
DIFFERENT
ACCESS TIME

S509
NO RESTRAINT
BETWEEN OTHER
MOBILE STATIONS

END

| European Patent Office | EUROPEAN SEARCH REPORT | Application Number |
| --- | --- | --- |
| | | EP 05 25 6702 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | EP 1 414 253 A (MATSUSHITA ELECTRIC IND CO LTD [JP]) 28 April 2004 (2004-04-28)<br>* abstract *<br>* paragraphs [0010], [0011], [0016] - [0027], [0048] - [0068] * | 1-19 | INV.<br>H04Q7/38 |
| X | EP 1 195 921 A (MATSUSHITA ELECTRIC IND CO LTD [JP]) 10 April 2002 (2002-04-10)<br>* abstract *<br>* paragraphs [0009], [0018], [0030] - [0032]; claims 1,2 * | 1-19 | |
| X | US 6 483 819 B1 (TAKE KEIJIRO [JP] ET AL) 19 November 2002 (2002-11-19) | 1,3-5,<br>8-10,<br>12-14,<br>17-19 | |
| A | * abstract *<br><br>* column 2, lines 1-34; figures 2,4a,4b,5,6 *<br>* column 4, line 25 - column 6, line 51 *<br>* column 7, lines 14-16 * | 2,6,7,<br>11,15,16 | |
| | | | TECHNICAL FIELDS SEARCHED (IPC) |
| | | | H04Q |
| A | US 2003/060169 A1 (TAKANO HIROAKI [JP]) 27 March 2003 (2003-03-27)<br>* abstract *<br>* paragraphs [0005], [0012], [0013], [0016] - [0021], [0031] - [0033]; figure 1 * | 1-19 | |

The present search report has been drawn up for all claims

| Place of search | Date of completion of the search | Examiner |
| --- | --- | --- |
| Berlin | 15 November 2006 | Englund, Terese |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................
& : member of the same patent family, corresponding document

EPO FORM 1503 03.82 (P04C01)

# EP 1 746 853 A1

## ANNEX TO THE EUROPEAN SEARCH REPORT
## ON EUROPEAN PATENT APPLICATION NO.

EP 05 25 6702

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2006

| Patent document cited in search report | | Publication date | Patent family member(s) | | Publication date |
|---|---|---|---|---|---|
| EP 1414253 | A | 28-04-2004 | AU | 2003221065 A1 | 20-10-2003 |
| | | | CN | 1643951 A | 20-07-2005 |
| | | | WO | 03085998 A1 | 16-10-2003 |
| | | | US | 2004214602 A1 | 28-10-2004 |
| EP 1195921 | A | 10-04-2002 | AU | 5881301 A | 03-12-2001 |
| | | | CN | 1381106 A | 20-11-2002 |
| | | | WO | 0191332 A1 | 29-11-2001 |
| | | | US | 6968212 B1 | 22-11-2005 |
| US 6483819 | B1 | 19-11-2002 | FR | 2783389 A1 | 17-03-2000 |
| | | | JP | 3473434 B2 | 02-12-2003 |
| | | | JP | 2000092545 A | 31-03-2000 |
| US 2003060169 | A1 | 27-03-2003 | JP | 2003101515 A | 04-04-2003 |

EPO FORM P0459

For more details about this annex : see Official Journal of the European Patent Office, No. 12/82

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002084216 A
- JP 2001523901 A